# EUROPEAN PATENT SPECIFICATION

(11) **EP 1 758 939 B1**
(45) Date of publication and mention of the grant of the patent: **12.10.2016**
(21) Application number: 05734355.0
(22) Date of filing: 12.04.2005
(51) Int. Cl.: C08B 30/14, C08B 30/12, C08B 31/00, C08B 31/04, C08B 31/18

(54) **A NEW GENERATION OF STARCHY PRODUCTS**
EINE NEUE GENERATION VON STÄRKEHALTIGEN PRODUKTEN
UNE NOUVELLE GENERATION DE PRODUITS A BASE D'AMIDON

(30) Priority: 16.04.2004 EP 04252233
(43) Date of publication of application: 07.03.2007
(73) Proprietor: Cargill Inc., Wayzata, MN 55391 (US)
(72) Inventor: DEBON, Stéphane, Jules, Jérôme, B-1060 Bruxelles (BE); KETTLITZ, Bernd, Wolfgang, B-2820 Bonheiden (BE); COPPIN, Jozef, Victor, Jean, Marie, B-9470 Denderleeuw (BE); DELEPINE, Eric, Phillipe, Jean-Pierre, 59930 La Chapelle d'Armentieres (FR); KESTELOOT, Pierre, Jean, Albert, F-59184 Sainghin en Weppes (FR)
(74) Representative: Wilkinson, Stephen John
(86) International application number: PCT/EP2005/003829
(87) International publication number: WO 2005/100407

(56) References cited:
- EP-A- 0 811 633
- US-A- 3 284 221
- US-A- 4 035 235
- US-A1- 2002 142 087

## Description

### Technical Field

The current invention relates to non-lumping instant thickening starches, with applications in food, feed, pharma and the like. A process for preparing these starches is disclosed as well.

### Background

So far it is known that the dispersibility of instant starches can be improved by either of the following methods: physical treatment, adding surface-active agents or adding food-grade bulking agents such as maltodextrins, sugars, fibers and the like.

EP 0 436 208 describes a heat-moisture treatment of starch.

WO 01/19404 describes delayed viscosity development or thin-thick behaviour (development of viscosity after shear) by partial pregelatinisation of highly crossbonded potato starch.

WO 00/75192 relates to cold water swellable starches exhibiting delayed viscosity development after roll compaction and as such lump formation is reduced.

US 3,443,990, and US 3,582,350 each describe the addition of surfactant and/or emulsifiers.

US 4,361,592, and EP 1 166 645 describe the addition of a kind of bulking agent to improve the dispersibility of instant starches.

EP-A2-0 811 633 is directed to heat stable high viscosity starches. Example 5 recites the combination of n-octenyl succinylation and hypochlorite treatment on waxy maize starch and its impact on stabilisation effect, without however specifying the drying procedure used.

However, there is still a need for a starch-based thickener with a large swelling power and at the same time providing a lump-free viscous paste when using hot or boiling water containing liquids.

The current invention provides such a product.

### Summary of Invention

The current invention relates to a non-lumping granular cold water swellable starch that when dispersed in water at a temperature of at least 95°C develops its full viscosity in less than 30 seconds (at a concentration of at least 3%). It is dispersible in cold water, or in water of a temperature of at least 95°C. When dispersed in water at a temperature of at least 95°C its full viscosity is developed in less than 30 seconds, preferably in less than 20 seconds, more preferably in less than 15 seconds. The granules of the starch remain intact upon dispersing in cold water, or water of a temperature of at least 95°C. When dispersed in water at a temperature of at least 95°C its viscosity (at a concentration of at least 3%) is already higher than 4500 mPa.s, preferably higher than 5000 mPa.s more preferably higher than 5500 mPa.s.

Said starch is obtained from a source selected from the group consisting of native leguminous starch, native cereal starch, native root starch; native tuber starch, native fruit starch, modified leguminous starch, modified cereal starch, modified root starch, modified tuber starch, modified fruit starch, waxy type starches, high amylose starches and mixtures thereof. Said modified starch is obtained by a modification selected from the group consisting of bleaching, esterification, etherification, phosphorylation and combinations thereof.

The current invention further relates to a process for preparing a non-lumping granular cold water swellable starch that when dispersed in water at a temperature of at least 95°C develops its full viscosity in less than 30 seconds (at a concentration of at least 3%) according to claim 1.

Said process comprises the steps:
a) subjecting a starch to
   a₁) Bleaching of starch with a reagent that is capable of forming active chlorine under alkaline conditions;
   a₂) n-alkenyl-succinylation, with n-alkenyl-succinic anhydride, preferably n-octenylsuccinylation with n-octenylsuccinic anhydride,
b) spray-cooking/drying the starch obtained from step a);
wherein the order of step a₁) and a₂) is interchangeable, or wherein step a1) and a2) occur simultaneously, and wherein the process does not comprise a viscosity reduction step.

The active chlorine is preferably present in an amount of from 100 to 4000 ppm and the alkaline conditions are defined by a pH between 7.5 and 11.5.

The current invention further relates to a process comprising the following steps:
a₁. Bleaching of starch with active chlorine present in an amount of from 100 to 4000 ppm at a pH between 7.5 and 11.5
a₂. n-octenyl-succinylation with n-octenylsuccinic anhydride,
b. Spray-cooking/drying of bleached n-octeny-succinylated starch, wherein step a₁) and a₂) occur simultaneously or wherein step a₂) occurs before a₁).

Furthermore the current invention relates to the use of non-lumping granular cold water swellable starch that when dispersed in water at a temperature of at least 95°C develops its full viscosity in less than 30 seconds (at a concentration of at least 3%) in food products, feed products, cosmetics, pharma products, agrochemicals, and industrial applications.

Said food products are selected from the group consisting of soups, sauces, desserts, dressings, bakery products, and sauce binders. The feed products are selected from the group consisting of pet foods, fish feed, and piglet feed. The pharma products are selected from the group consisting of excipient in tablets, thickeners for syrups, and liquors.

### Description of Figure

Figure 1 is a picture taken from a dispersion of 15 g starch of the current invention (spray-dried C☆EmTex 06328) in 500 ml still mineral water (pH 6.0; Spa™, Belgium) at a temperature of at least 95°C. No lumps are observed.
Figure 2 is a picture taken with light microscope (x100): after dispersion in mineral water at a temperature of at least 95°C. Intact swollen granules in suspension are seen.

### Detailed description

The current invention relates to a non-lumping granular cold water swellable starch that when dispersed in water at a temperature of at least 95°C develops its full viscosity in less than 30 seconds (at a concentration of at least 3%).

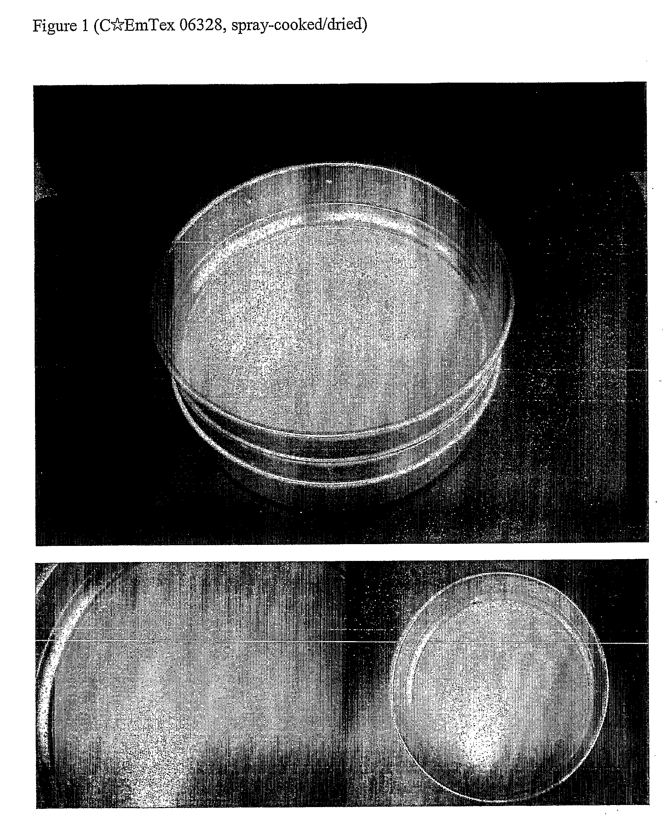

The fact that the starch is non-lumping can be observed by dispersing in one go 15 g of starch in 500 ml still mineral water of a temperature of at least 95°C. For 1 minute the dispersion is stirred and then it is poured on a sieve of 355 µm. Figure 1 is a picture taken with digital camera and demonstrate the effect to be seen, i.e. no lumps are formed. The starch of the current invention is dispersible in cold water, or in water of a temperature of at least 95°C. When dispersed in water at a temperature of at least 95°C its viscosity (at a concentration of at least 3%) is already higher than 4500 mPa.s, preferably higher than 5000 mPa.s more preferably higher than 5500 mPa.s. Actually while dispersing, its viscosity (measured with Brookfield) is developed instantly, i.e in less than 30 seconds, preferably in less than 20 seconds, more preferably in less than 15 seconds. Development of its full viscosity can further be explained in that there is no post-thickening effect observed, or no delayed viscosity development. The granules of the starch remain intact upon dispersing in cold water, or water of a temperature of at least 95°C.

Gold water swellable starches are defined as starches which, when added to cold water, will rapidly disperse into water and swell to form a viscous paste. The temperature of the cold water is not higher than room temperature (20-25°C).

The purpose of the present invention is to provide starch-based thickeners, emulsifiers, water-binders, suspending agents, clouding agents, and the like, which have a good dispersibility in cold, hot and boiling water-containing fluids (*i.e.* lump-free) without the need of adding a dispersant (*e.g.* surface-active, bulking agents, and the like) or without submitting the starch to a downstream physical treatment (*e.g.* compaction, or post-agglomeration, and the like).

The starch of the current invention is granular, cold water swellable but not cold water soluble due to the intact granular structure.

The Brookfield viscosity of the starch of the current invention is extremely high, i.e higher than 4500 mPa.s, preferably higher than 5000 mPa.s, more preferably higher than 5500 mPa.s at 3% concentration (percentage is each time referring to dry substance) in demineralised water at 20°C (10 rpm, spindle 2). This viscosity is completely different from the viscosity of enzyme modified starches according to the process described in US 4,035,235, which have a viscosity of between 125 to 500 mPa.s at 30% concentration at 25°C.

The starch used as a base material for the current invention is obtained from a source selected from the group consisting of native leguminous starch, native cereal starch, native root starch, native tuber starch, native fruit starch, modified leguminous starch, modified cereal starch, modified root starch, modified tuber starch, modified fruit starch, waxy type starches, high amylose starches and mixtures thereof. Actually, the starches and flours (hereinafter "starch") preferably starches, used as the base material in the current invention can be derived from any native source, wherein native relates to the fact that said starch is found in nature. Typical sources for the starches are cereals, tubers, roots, legumes, fruit starches and hybrid starches. Suitable sources include corn, pea, potato, sweet potato, sorghum, banana, barley, wheat, rice, sago, amaranth, tapioca, arrowroot, canna, and waxy (containing at least about 95% by weight amylopectin) or high amylose (containing at least 40% by weight amylose) varieties thereof. Also suitable are starches derived from a plant obtained by breeding techniques including crossbreeding, translocation, inversion, transformation or any other method of gene or chromosome engineering to include variations thereof. In addition, starch derived from a plant grown from artificial mutations and variations of the above generic composition which may be produced by known standard methods of mutation breeding are also suitable herein.

Chemical modifications are intended to include without limitation crosslinked starches, acetylated and organically esterified starches, hydroxyethylated and hydroxypropylated starches, phosphorylated and inorganically esterified starches, cationic, anionic, oxidized starches, zwitterionic starches, and succinate and substituted succinate derivatives of starch and combinations thereof.

In a further embodiment the current invention further relates to a non-lumping granular cold water swellable starch that when dispersed in water at a temperature of at least 95°C develops its full viscosity in less than 30 seconds (at a concentration of at least 3%) obtainable by bleaching n-alkenyl-succinylation, and spray-cooking/drying, preferably by bleaching n-octenyl-succinylation and spray-cooking/drying.

Physically modified starches such as thermally inhibited starches may also be suitable for use herein, as base material.

The starch obtainable according to the process disclosed in EP 0811633, is a preferred source of the starch used for the further treatment, i.e. spray-cooking/drying.

Eventually alkali roasting can be applied as well as a process step.

In case the starch is prepared by spray-cooking/drying of unmodified (native) or modified starch, an apparatus as is described in US 4,280,851, is applied.

An aqueous starch slurry is sprayed through an atomisation aperture in the nozzle. A heating medium such as steam is injected through another aperture in the nozzle and into the spray. On exiting the nozzle vent aperture, the resultant starch is in a finely sized atomised state and is easily dried in the spray-drying tower. The dried starch can be recuperated in bags to be readily used in applications or it can be re-injected to the top of the tower, such that the trajectory of that recirculating dry powder crosses the spray pattern of the spray-cooked nozzle in order to produce agglomerated particles. The agglomerated particles are recuperated in an external fluid bed. The product from the fluid bed was sieved in a sifter and the oversize fraction was disrupted in a mill. The agglomeration and the particle size distribution of agglomerated starch can be controlled by the nozzle configuration and by the application of a sifter and a suitable mill to screen off and to mill an oversized fraction. The average particle size is closely related to the aperture of the top screen to be used in the sifter.

Furthermore the process parameters are correlated to the type of starch, and each type of starch has well-defined process parameters.

The process parameters for applying stabilised starch n-octenyl succinate (e.g. C☆EmTex 06328) as base material are specified in example 1. The thus obtained product is non-lumping granular cold water swellable starch that when dispersed in water at a temperature of at least 95°C develops its full viscosity in less than 30 seconds (at a concentration of at least 3%). (see Figure 1) Its full viscosity is developed at significant lower concentrations, ie. at concentrations that are about 25% by weight lower than concentrations of products normally needed to develop same viscosity.

For example at 20°C, only 3.1% (w/w) of starch of current invention is needed to develop a Brookfield viscosity of more than 5880 mPa-s, whereas a spray-cooked/dried low crossbonded hydroxypropyl water cold water swelling starch (e.g. C☆HiForm A 12742) is added in amount of 4.2% (w/w %) for obtaining at 20°C a Brookfield viscosity of 4780 mPa-s.

The spray-cooking/drying process produces pregelatinised starches known as cold water swellable starches and results in complete starch granule integrity.

The current invention further relates to a process comprising the following steps:
a₁. Bleaching of starch,
a₂. n-alkenyl-succinylation with n-alkenylsuccinic anhydride, preferably n-octenyl-succinylation with n-octenylsuccinic anhydride,
b. Treating the starch wherein said treatment is selected from the group consisting of spray-cooking/drying,
c. Obtaining a non-lumping granular cold water swellable starch that when dispersed in water at a temperature of at least 95°C develops its full viscosity in less than 30 seconds (at a concentration of at least 3%) and wherein the order of step a₁) and a₂) is interchangeable, or wherein step a₁) and a₂) occur simultaneously.

The process of the current invention does not involve a viscosity reduction step such as thinning, enzymatic degradation and the like.

In step a₁) bleaching is taking place with reactant that is capable of forming active chlorine under alkaline conditions.

The addition of active chlorine can occur before, during or after the chemical modification reaction (e.g. n-octenyl-succinylation). The addition of active chlorine during or after the chemical modification is preferred because of a more pronounced stabilization effect with the same treatment level of chlorine.

The active chlorine can be obtained from hypochlorite which may be used as sodium hypochlorite, potassium hypochlorite, calcium or magnesium hypochlorite. The hypochlorite may also be replaced with a combination of reactants which are capable of forming active chlorine in situ, e.g. peracetic acid and/or hydrogen peroxide in the presence of excess chloride ions.

In a typical preferred embodiment, step a₁) and a₂) (=bleaching and n-octenyl succinylation) of the process disclosed in the current invention can be performed according to the process disclosed in EP 0811633.

The active chlorine is present in an amount of from 100 to 4000 ppm, preferably 500-2000 ppm and the alkaline conditions are defined by a pH between 7.5 and 11.5, preferably between 8.5 and 10.5.

In general the reaction conditions (chlorine level, time, temperature, pH) have to be controlled in such a way that no starch degradation and no substantial formation of carboxyl groups (< 0.1%) occur.

Typical reaction times and temperatures are between 0.25 to 5 hours and between 10 and 55°C respectively.

A further advantage of the process of the present invention is that the hypochlorite reaction is performed under alkaline conditions and that a number of the other possible cross-bonding reaction are also normally performed under alkaline conditions so that the reactions can be performed simultaneously or consecutively without the need for changing the pH between the steps. Thus a one-pot process becomes possible.

The current invention further relates to a process comprising the following steps:
a₁.Bleaching of starch with active chlorine present in an amount of from 100 to 4000 ppm at a pH between 7.5 and 11.5
a₂. n-octenyl-succinylation with n-octenylsuccinic anhydride,
b. Spray-cooking/drying of bleached n-octenyl succinylated starch,

Wherein the order of step a₁) and step a₂) is interchangeable or wherein step a₁) and step a₂) occur simultaneously, preferably step a₁) and step a₂) occur simultaneously, more preferably step a₂) occurs before step a₁).

Furthermore the current invention relates to the use of non-lumping granular cold water swellable starch that when dispersed in water at a temperature of at least 95°C develops its full viscosity in less than 30 seconds (at a concentration of at least 3%) in food products, feed products, cosmetics, pharma products, agrochemicals, and industrial applications.

Said food products are selected from the group consisting of soups, sauces, desserts, dressings, bakery products, and sauce binders. The feed products are selected from the group consisting of pet foods, fish feed, and piglet feed. The pharma products are selected from the group consisting of excipient in tablets, thickeners for syrups, and liquors.

The current invention has the following advantages:
- New generation of starchy products is obtained.
- New generation of cold water swellable starches
- The products are non-lumping and the full viscosity is immediately developed.
- The products develop high viscosity at very low concentration (about 3% weight in water)
- The products have versatile non-limiting application fields in food and non-food products.

The current invention is illustrated by the following, non-limiting example.

### Example 1

### Process:

The product applied as base starch material was cook-up C☆EmTex 06328 (Cerestar).

The product was processed according to the parameters displayed in table 1.

**Table 1**

| | | Process System |
|---|---|---|
| Type | | pilot, wide body, straight through agglomeration |
| steam pressure (spitting-free conditions) | bars | 8-12 |
| steam mass flow | kg/h | 430-600 |
| specific steam consumption (steam/slurry mass ratio) | - | 0.65-0.91 |
| air inlet temperature | °C | 240 |
| air outlet temperature | °C | 85-92 |
| mass flow air | kg/h | 7300-7700 |
| fine grade/ agglomerated grade | | agglomerated |

This product is non-lumping, see figure 1.

Further characteristics are displayed in table 2.

**Table 2**

| CWS Starches | starch concentration (w/w%) | dispersion in cold (20°C) water* | dispersion in boiling (>95°C) water* |
|---|---|---|---|
| | | Brookfield viscosity after 1 hour at 20°C | |
| C☆EmTex 06328 spray-cooked/dried | 3.1 | 5,887±105 mPa.s | 9,660±506 mPa.s |

| | | | |
|---|---|---|---|
| * average of n=3 replicates. C☆EmTex 06328 spray-cooked/dried is the preferred product of the current invention (Figure 1). | | | |

Brookfield Analysis: Concentration in w/w %/% anhydrous starch (moisture content is measured with an infra-red moisture balance set at 130°C for 20 minutes).

In a 400mL beaker, containing 250g still mineral water (either at 20°C or >95°C), a vortex was created by magnetic stirring (800 rotations.min⁻¹). The required amount of starch was poured via a conical cylinder (20 mm bottom diameter), 60 mm above the beaker, directly into the vortex. The magnetic stirring was stopped after one minute and the beaker was allowed to stand 1 hour in a water-bath set at 20.0±0.1°C. The viscosity was measured with a Brookfield DV-II (spindle 2) at a shear rate of 10 s⁻¹.

A viscous paste (non-lumping) can be obtained with the spray-cooked/dried starch of the invention at a much lower concentration (3.1%) compared to other CWSS which needs higher concentration (4.0-4.2%) and form lumps.

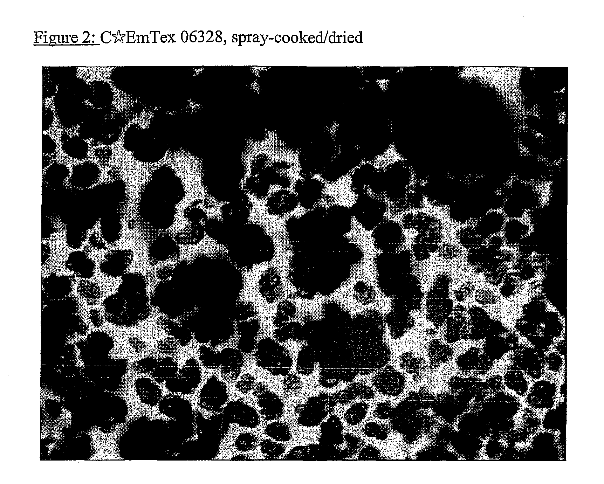

Figure 2 is a picture taken with the light microscope and showing the intact swollen granules in suspension.

### Comparative Example

Product characteristics of the starch base material (C☆EmTex 06328) and spray-cooked/dried C☆EmTex 06328 (of current invention) and alpha-amylase treated n-octenylsuccinate starch are compared in Table 3.

**Table 3**

| Parameters | C☆EmTex 06328 | Alpha-amylase treated n-octenylsuccinate starch | **Product of Invention** spray-cooked/dried C☆EmTex 06328 |
|---|---|---|---|
| Granular state | Granular | Non-granular | Intact, granular |
| Cold water soluble starch | No | Yes | No |
| Cold water swellable starch | No | No | Yes |
| Brookfield viscosity | No cold water viscosity (starch is sedimenting) | 125-500 mPa.s at 30% concentration, 25°C | > 5000 mPa.s at 3% concentration, 20°C |
| Lump formation (cold water) | No | Not relevant since it is SOLUBLE | No |
| Lump formation (water at 95°C) | Yes | Not relevant since it is SOLUBLE | No |

## Claims

1. A process for preparing a granular starch which rapidly disperses and swells to form a viscous paste when added to water having a temperature not higher than from 20°C to 25°C and which, when 15 grams of the said granular starch are dispersed in one go in 500 ml still mineral water having a temperature of at least 95°C and the dispersion is stirred for 1 minute and then poured onto a sieve of 355 µm, shows no lump formation and which develops its full viscosity in less than 30 seconds at a concentration of at least 3% when dispersed in water at a temperature of at 95°C, wherein the process comprises the steps:
a) subjecting a starch to
a1) bleaching with a reagent that is capable of forming active chlorine under alkaline conditions;
a2) n-alkenyl-succinylation by reaction with an n-alkenylsuccinic anhydride;
b) spray-cooking/drying the starch obtained from step a); wherein the order of steps a1) and a2) is interchangeable or wherein steps a1) and a2) occur simultaneously, and wherein the process does not comprise a viscosity reduction step.

2. The process according to claim 1, wherein the n-alkenyl-succinylation in step a2) is an n-octenyl-succinylation.

3. The process according to either claim 1 or claim 2, wherein in step a1) the active chlorine is present in an amount of from 100 to 4000 ppm at a pH between 7.5 and 11.5.

4. A granular starch which rapidly disperses and swells to form a viscous paste when added to water having a temperature not higher than from 20°C to 25°C and which, when 15 grams of the said granular starch are dispersed in one go in 500 ml still mineral water having a temperature of at least 95°C and the dispersion is stirred for 1 minute and then poured onto a sieve of 355 µm, shows no lump formation and which develops its full viscosity in less than 30 seconds at a concentration of at least 3% when dispersed in water at a temperature of at least 95°C, said granular starch being obtainable by the process of any one of claims 1 to 3.

5. A granular starch according to claim 4, further **characterised in that** it has a Brookfield viscosity in demineralised water at 20°C (10 rpm, spindle 2) and at a concentration of 3% dry substance which is greater than 4500 mPa.s.

6. Use of the granular starch according to either claim 4 or claim 5 in food products, feed products, cosmetics, pharma products, agrochemicals, and industrial applications.

7. Use according to claim 6, wherein the food products are selected from soups, sauces, desserts, dressings, bakery products and sauce binders.

8. Use according to claim 6, wherein the feed products are selected from pet foods, fish feed and piglet feed.

9. Use according to claim 6, wherein the pharma products are excipients in tablets, thickeners for syrups, and liquors.

## Patentansprüche

1. Verfahren zur Herstellung einer granulären Stärke, die rasch dispergiert und quillt, um bei Zugabe zu Wasser eine viskose Paste zu bilden, die eine Temperatur von nicht höher als 20 °C bis 25 °C aufweist und die, wenn 15 Gramm der granulären Stärke in einem Durchgang in 500 mL stillem Mineralwasser dispergiert werden, das eine Temperatur von mindestens 95 °C aufweist und die Dispersion für 1 Minute gerührt wird und dann auf ein Sieb von 355 µm gegeben wird, keine Klumpenbildung zeigt und ihre volle Viskosität in weniger als 30 Sekunden bei einer Konzentration von mindestens 3 % entwickelt, wenn sie in Wasser bei einer Temperatur von mindestens 95 °C dispergiert wird,
wobei das Verfahren die Schritte umfasst:
a) Aussetzen einer Stärke
a1) dem Bleichen mit einem Reagenz, das aktives Chlor unter alkalinen Bedingungen bilden kann;
a2) einer n-Alkenyl-Succinyllierung durch Reaktion mit einem n-Alkylenbernsteinsäureanhydrid;
b) Sprühkochen/-trocknen der Stärke, die in Schritt a) erhalten wurde;
wobei die Reihenfolge der Schritte a1) und a2) austauschbar ist oder wobei die Schritte a1) und a2) gleichzeitig erfolgen, und wobei das Verfahren keinen Schritt zur Viskositätsreduktion umfasst.

2. Verfahren nach Anspruch 1, wobei die n-Alkenyl-Succinylierung in Schritt a2) eine n-Octenyl-Succinylierung ist.

3. Verfahren nach einem der Ansprüche 1 oder 2, wobei in Schritt a1) das aktive Chlor in einer Menge von 100 bis 4000 ppm bei einem pH-Wert zwischen 7,5 und 11,5 vorliegt.

4. Granuläre Stärke, die rasch dispergiert und quillt, um bei Zugabe zu Wasser eine viskose Paste zu bilden, die eine Temperatur von nicht höher als 20 °C bis 25 °C aufweist und die, wenn 15 Gramm der granulären Stärke in einem Durchgang in 500 mL stillem Mineralwasser dispergiert werden, das eine Temperatur von mindestens 95 °C aufweist, und die Dispersion für 1 Minute gerührt wird und dann auf ein Sieb von 355 µm gegeben wird, keine Klumpenbildung zeigt und ihre volle Viskosität in weniger als 30 Sekunden bei einer Konzentration von mindestens 3 % entwickelt, wenn sie in Wasser bei einer Temperatur von mindestens 95 °C dispergiert wird, wobei die granuläre Stärke durch ein Verfahren nach einem der Ansprüche 1 bis 3 erhalten werden kann.

5. Granuläre Stärke nach Anspruch 4, ferner **dadurch gekennzeichnet, dass** sie eine Brookfield-Viskosität in entmineralisiertem Wasser bei 20 °C (10 UpM, Spindel 2) und bei einer Konzentration von 3 % Trockensubstanz von mehr als 4500 mPa.s aufweist.

6. Verwendung der granulären Stärke nach Anspruch 4 oder Anspruch 5 in Lebensmittelprodukten, Futtermittelprodukten, Kosmetika, Pharmaprodukten, Agrochemikalien und Industrieanwendungen.

7. Verwendung nach Anspruch 6, wobei die Lebensmittelprodukte ausgewählt sind aus Suppen, Saucen, Desserts, Dressings, Backwaren und Soßenbindern.

8. Verwendung nach Anspruch 6, wobei die Futterprodukte ausgewählt sind aus Tierfutter, Fischfutter und Ferkelfutter.

9. Verwendung nach Anspruch 6, wobei die Pharmaprodukte Hilfsstoffe in Tabletten, Sirupverdickungsmittel und Laugen sind.

## Revendications

1. Procédé de préparation d'un amidon granulaire qui se disperse et se gonfle rapidement pour former une pâte visqueuse lorsqu'il est ajouté à de l'eau ayant une température qui n'est pas supérieure à 20 °C à 25 °C et qui, lorsque 15 grammes dudit amidon granulaire sont dispersés en une fois dans 500 mL d'eau minérale au repos ayant une température d'au moins 95 °C et que la dispersion est agitée pendant 1 minute et ensuite versée sur un tamis de 355 µm, ne montre pas de formation de grumeaux et développe sa pleine viscosité en moins de 30 secondes en concentration d'au moins 3 % lorsqu'il est dispersé dans de l'eau à une température d'au moins 95 °C, dans lequel le procédé comprend les étapes consistant à :
a) soumettre un amidon à :
a1) un blanchiment avec un réactif qui est capable de former du chlore actif dans des conditions alcalines ;
a2) une n-alcényl-succinylation par réaction avec un anhydride n-alcénylsuccinique ;
b) cuire/sécher par pulvérisation l'amidon obtenu à l'étape a) ;
dans lequel l'ordre des étapes a1) et a2) est interchangeable ou dans lequel les étapes a1) et a2) se font simultanément et dans lequel le procédé ne comprend pas d'étape de réduction de viscosité.

2. Procédé selon la revendication 1, dans lequel la n-alcényl-succinylation de l'étape a2) est une n-octényl-succinylation.

3. Procédé selon la revendication 1 ou la revendication 2, dans lequel le chlore actif est présent à l'étape a1) en quantité de 100 à 4000 ppm à un pH compris entre 7,5 et 11,5.

4. Amidon granulaire qui se disperse et gonfle rapidement pour former une pâte visqueuse lorsqu'il est ajouté à de l'eau ayant une température qui n'est pas supérieure à 20 °C à 25 °C et qui, lorsque 15 grammes dudit amidon granulaire sont dispersés en une fois dans 500 mL d'eau minérale au repos ayant une température d'au moins 95 °C et que la dispersion est agitée pendant 1 minute, puis versée sur un tamis de 355 µm, ne montre pas de formation de grumeaux et développe sa pleine viscosité en moins de 30 secondes en concentration d'au moins 3 % lorsqu'il est dispersé dans de l'eau à une température d'au moins 95°C,
ledit amidon granulaire pouvant être obtenu par le procédé selon l'une quelconque des revendications 1 à 3.

5. Amidon granulaire selon la revendication 4, **caractérisé en outre en ce qu'**il présente une viscosité de Brookfield dans de l'eau déminéralisée à 20 °C (10 tr/min, broche n° 2) et en concentration de 3 % de substance sèche qui est supérieure à 4500 mPa.s.

6. Utilisation de l'amidon granulaire selon la revendication 4 ou la revendication 5 dans des produits alimentaires, des produits d'alimentation animale, des cosmétiques, des produits pharmaceutiques, des produits agrochimiques et des applications industrielles.

7. Utilisation selon la revendication 6, dans laquelle les produits alimentaires sont choisis parmi les soupes, les sauces, les desserts, les assaisonnements, les produits de boulangerie et les liants de sauces.

8. Utilisation selon la revendication 6, dans laquelle les produits d'alimentation animale sont choisis parmi les aliments pour animaux de compagnie, l'alimentation pour les poissons et l'alimentation pour les porcelets.

9. Utilisation selon la revendication 6, dans laquelle les produits pharmaceutiques sont des excipients pour comprimés, des épaississants pour sirops et des liqueurs.
